(19) **Europäisches Patentamt / European Patent Office / Office européen des brevets**

(11) **EP 1 538 319 B1**

(12) **EUROPEAN PATENT SPECIFICATION**

(45) Date of publication and mention
of the grant of the patent:
**29.04.2009 Bulletin 2009/18**

(51) Int Cl.:
*F02C 9/00* (2006.01)

(21) Application number: **03257655.5**

(22) Date of filing: **05.12.2003**

(54) **Apparatus for model predictive control of aircraft gas turbine engines**

Vorrichtung zur modell-prädikativen Regelung eines Flugzeugtriebwerkes

Dispositif de régulation à prédiction basée sur modèle pour un moteur d'aéronef

(84) Designated Contracting States:
**CH DE FR GB LI SE**

(43) Date of publication of application:
**08.06.2005 Bulletin 2005/23**

(73) Proprietor: **GENERAL ELECTRIC COMPANY**
**Schenectady, NY 12345 (US)**

(72) Inventor: **Brunell, Brent Jerome**
**Clifton Park**
**New York 12065 (US)**

(74) Representative: **Bedford, Grant Richard et al**
**GE**
**London Patent Operation**
**15 John Adam Street**
**London WC2N 6LU (GB)**

(56) References cited:
**EP-A- 0 315 307**       **US-A- 4 215 412**

- **J.M. MACIEJOWSKI: "Predictive control with constraints" 2002 , PEARSON EDUCATION LIMITED , EDINBURGH GATE, HARLOW, ESSEX, CM20 2JE, ENGLAND XP009030900 * page 1 - page 29 ***
- **MARCO ZEDDA, RITI SINGH: "Gas turbine engine and sensor fault diagnosis using optimization techniques" JOURNAL OF PROPULSION AND POWER, vol. 18, no. 5, 1 September 2002 (2002-09-01) - 31 October 2002 (2002-10-31), pages 10191019-1025, XP009030907**
- **SURESH SAMPATH, ANKUSH GULATI, RITI SINGH: "Fault diagnostics using genetic algorithm for advanced cycle gas turbine" PROCEEDINGS OF THE ASME TURBO EXPO 2002, 3 - 6 June 2002, pages 19-27, XP009030899 Amsterdam, Netherlands**
- **JOE QIN S.; THOMAS A. BADGWELL: 'A survey of industrial model predictive control technology' CONTROL ENGINEERING PRACTICE vol. 11, no. 7, July 2003, pages 733 - 764, XP002435295**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

This invention relates generally to aircraft engine power management schemes and more particularly, to Methods and apparatus for nonlinear model predictive control of an aircraft gas turbine.

Gas turbines are used in different environments, such as, for example, but not limited to, providing propulsion as aircraft engines and for power generation in both land based power systems and sea borne power systems. The gas turbine model considered is a low bypass, two rotor, turbojet with a variable exhaust area that would be used in military aircraft applications. During normal operation this turbine experiences large changes in ambient temperature, pressure, Mach number, and power output level. For each of these variations the engine dynamics change in a significant nonlinear manner. Careful attention is typically paid by the controller during engine operation to ensure that the mechanical, aerodynamic, thermal, and flow limitations of the turbo machinery is maintained. In addition, the control authority is restricted by the actuator rate and saturation limits. One typical control authority is a called a Full Authority Digital Engine Controllor (FADEC). Current technology solves this nonlinear constrained problem using many SISO linear controllers in concert that are gain scheduled and min/max selected to protect against engine limits. While the existing methods have many merits, there exists a need to solve the problem using nonlinear model predictive control (NMPC), which handles the nonlinearities and constraints explicitly and in a single control formulation.

Joe Qin S; Thomas A Badgwell: "A survey of industrial model predictive control technology" Control Engineering Practice, vol. 11, no. 7, July 2003 (2003-07), pp 733-764, XP002435295 provides an overview of commercially available model predictive control (MPC) technology, both linear and nonlinear, based primarily on data provided by MPC vendors.

Various aspects and embodiments of the present invention are defined in the appended claims.

Embodiments of the invention will now be described, by way of example, with reference to the accompanying drawings, in which:

Figure 1 illustrates a schematic of a layout of an engine.
Figure 2 illustrates a comparison of SRTM and CLM for PCN2 and PS3.
Figure 3 illustrates an implementation of NMPC based on the constrained open-loop optimization of a finite horizon objective function.
Figure 4 illustrates a block diagram representation of how EKF, SRTM, NMPC, and CLM are connected.

First is discussed the gas turbine or plant and how it is modeled. Then a simplified model is introduced that will be used inside the control and the state estimator. In the following section a novel NMPC formulation is presented.

GLOSSARY

CLM - Component Level Model

EKF - Extended Kalman Filter

NMPC - Nonlinear Model Predictive Control

SRTM - Simplified Real Time Model

MODEL VARIABLES

Actuation Inputs

A8DMD - Exhaust Nozzle Area Demand

WFDMD - Fuel Flow Demand

Output Variables

FNAV - Thrust

N2 - Fan Speed

N25 - Core Speed

P2 - Fan Inlet Pressure

PCN2 - Percent Fan Speed

PCN25 - Percent Core Speed

PP - Engine Pressure Ratio

PS3 - Compressor Discharge Static Pressure

SM25 - Core Stall Margin

T4B - High Pressure Turbine Exit Temperature

Operational Parameters

ALT - Altitude

DTAMB - Ambient Temperature Deviation

XM - Mach Number

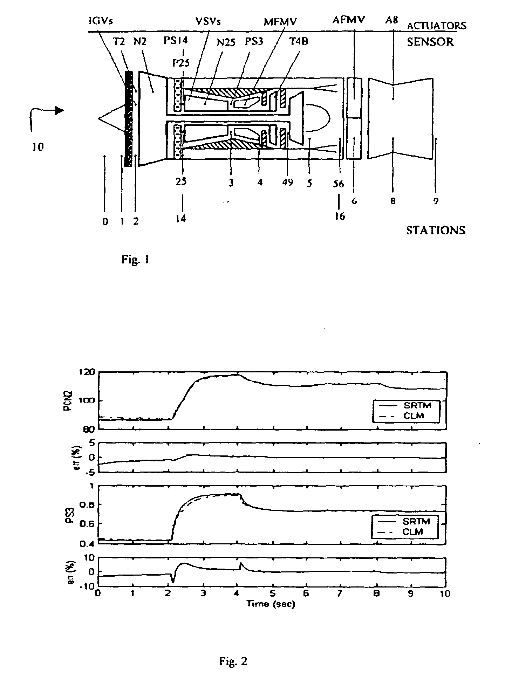

[0009]    Figure 1 illustrates a schematic of a layout of an engine 10 as well as the station designations, sensors, and actuators for engine 10. Engine 10 is an aerodynamically coupled, dual rotor machine wherein a low-pressure rotor system (fan and low-pressure turbine) is mechanically independent of a high-pressure (core engine) system. Air entering the inlet is compressed by the fan and then split into two concentric streams. One of these then enters the high-pressure compressor and proceeds through the main engine combustor, high-pressure turbine, and low-pressure turbine. The other is directed through an annular duct and then recombined with the core flow, downstream of the low-pressure turbine, by means of a convoluted chute device. The combined streams then enter the augmenter to a convergent-divergent, variable area exhaust nozzle where the flow is pressurized, expands, and accelerated rearward into the atmosphere, thus generating thrust.

The plant model is a physics based component level model (CLM) of this turbine configuration, which was developed by GE Aircraft Engines. This model is very detailed, high-fidelity, and models each component starting at the inlet, through the fan, compressor, combustor, turbines, and exhaust nozzle. Since NMPC is a model based control, an internal model is used to predict the future responses of the plant to control inputs. As the CLM is a very large and complicated model, a new model was developed to be used in the NMPC that has a small number of states, executes quickly, can be analytically linearized, and is accurate to within 20 percent transiently and 5 percent steady state over the area of the flight envelope that is most used.

The SRTM has two control inputs, fuel flow demand (WFDMD), and exhaust nozzle area demand (A8DMD), as well as ambient condition inputs; altitude (ALT), Mach (XM), and ambient temperature deviation from ISO (DTAMB). The outputs from the SRTM is all of the outputs currently used in the production control plus any other parameters such as stall margin and thrust that can be used in future studies and form the basis of the constrained operation. The outputs are, percent core speed (PCN25), percent fan speed (PCN2), fan inlet pressure (P2), fan total exit pressure (P14), fan static exit pressure (PS14), compressor inlet pressure (P25), engine pressure ratio (PP), compressor discharge static pressure (PS3), compressor discharge total pressure (P3), fan airflow (W2R), compressor airflow (W25R), fan inlet temperature (T2), compressor inlet temperature (T25), high pressure turbine exit temperature (T4B), fan stall margin (SM2), core stall margin (SM25), and thrust (FNAV).

A SRTM of an aircraft engine along with the main fuel metering valve (MFMV) and variable exhaust nozzle (A8) actuators is developed that meets the above specifications. The model is designed to replicate both transient and steady state performance. The inertias of both rotors are considered in the SRTM because they are the main factors affecting the engine transient performance. Other states include P3 which represents something similar to combustor volume, T42 which approximates the bulk flame dynamics, two states that represent fuel actuator dynamics, and 1 state that represents the A8 actuator dynamics. The model is data driven and is designed to use the steady state relationships/data from either a complex non-linear model, or from real engine data, and then fit parameters to transient data that account for the dynamics between the inputs and the other model states.

The SRTM considers the low pressure and high pressure rotor speeds as the main energy storage components, or the states of the model. These speeds can change state if an unbalanced torque is applied. Simply put, the speed increments of the engine are the integral of the surplus torques. This is stated mathematically as

$$\frac{d\omega}{dt} = \frac{1}{I} \sum_{i=1}^{N} Q_i \quad \text{Equation 1}$$

Where $\frac{d\omega}{dt}$ is the rotor angular acceleration, N is the number of unbalanced torques, $I$ is the rotor inertia, and $Q_i$ is the ith torque. The torques arise from any mismatches to the steady state relationships. For example, for a given PCN2 there is a steady state fuel flow. If the actual fuel flow is greater than the steady state relationship from PCN2 then a positive unbalanced torque will increase PCN2dot. PCN2dot can be similarly acted upon by the other rotor PCN25. The same logic is used on the PCN25 rotor. The other engine dynamic elements of the SRTM including T42 and PS3 act in a similar way to the rotors.

Also included in the SRTM are the inner loop and actuator dynamics for fuel flow and A8. In this part of the model there is a delay that is associated with computational delays, actuator delay, and transport delay of the fuel to the combustor. There is a gain that accounts for the change from commanded position to fuel flow. The actuator dynamics are modeled as 2nd order with rate and position limits. The A8 actuator is similar but is only 1st order actuator dynamics. Except for the FMV gain, all of the other parameters for this part of the model are found using nonlinear system identification.

The other outputs from the model specified above are generated from table lookups based on the dynamic element outputs. For validation the SRTM is run open loop versus the CLM. The inputs profiles for the validation are a large step increase in fuel at 2 sec., small step decrease in fuel at 4 sec., small step increase in A8 at 6 sec., and a large step decrease in A8 at 8 sec. The results of one such comparison are shown in Figure 2 for PCN2 and PS3. While for this comparison both parameters are within 10 percent transiently and 5 percent steady state, for all of the parameters over all tested points in the defined envelope the maximal deviation transiently is 22 percent and the maximal deviation steady state is 7 percent. These results are just outside of the requirements, but are still quite remarkable given the simplicity of the model structure.

These adaptive model-based control systems may detect faults, failures and/or damage, and then take such information and incorporate it into the model(s), optimization(s), objective function(s), constraint(s) and/or parameter(s) in the control system, preferably in real-time. This information allows the control system to take optimized action given the current engine conditions. Since these control systems are updated and adapted in real-time, they allow for any level of deterioration, faults, failures or damage to be accommodated, not just faults, failures and damage that have a *priori* solutions already programmed into the model(s) in the control system.

These adaptive model-based control systems and methods are designed to reduce operator workload and enable autonomous gas turbine operation by: (1) providing sufficient information to the supervisory control so that the supervisory control can manage propulsion, power and/or electrical output for the given mission or event; (2) elevating the level of autonomy in the engine control; (3) aiding the integration of the engine control with the supervisory control; and/or (4) improving engine-related decision-making capabilities.

Many model-based control systems are created by designing a model of each component and/or system that is to be controlled. For example, there may be a model of each engine component and system - compressor, turbine, combustor, etc. Each model comprises features or dynamic characteristics about the component's or system's behavior over time (i.e., speed accelerations being the integral of the applied torques). From the model(s), the system may control, estimate, correct or identify output data based on the modeled information. For example, if thrust or power is lost because an actuator is stuck in a specific position, the system can hold the control to that actuator fixed as an input constraint, and then adapt the controls that are output to the other actuators so that no other constraints are violated, and as much lost thrust power as possible can be regained so that the gas turbine may can continue operation.

The models in the model-based controls are designed to replicate both transient and steady state performance. The models can be used in their non-linear form or they can be linearized or parameterized for different operating conditions. Model-based control techniques take advantage of the model to gain access to unmeasured engine parameters in addition to the normal sensed parameters. These unmeasured parameters may include thrust, stall margins, and airflows. These controls can be multiple-input multiple-output (MIMO) to account for interactions of the control loops, they are model-based to get rid of the scheduling, and they have limits or constraints built as an integral part of the control formulation and optimization to get rid of designing controllers for each limit. The current strategy for this invention involves trying to collapse the controller into an objective function(s) and constraint(s) that is used as part of a finite horizon constrained optimization problem.

The herein described methods allow either performance or operability to be optimized. If the performance-optimizing mode is selected, the objectives include attempting to maximize or minimize thrust, power, electricity, specific fuel consumption, part life, stress, temperatures, pressures, ratios of pressures, speed, actuator command(s), flow(s), dollars, costs, etc. This leads to longer engine run times, fuel savings, increased transient performance, increased parts life, and/or lower costs. If the operability-optimizing mode is selected, the objectives include attempting to manage stall margin, increase operability, and prevent in-flight mishaps. This leads to reduction of loss of thrust or loss of power control events, increased engine operating time in presence of faults, failures, or damage and increased engine survivability.

The herein described adaptive model-based control systems and methods that comprise a system model, estimators, model-based diagnostics, and model-based control or model-predictive control. Physics-based and empirical models provide analytical redundancy of sensed engine parameters and access to unmeasured parameters for control and diagnostics purposes as well as provide prediction of future behavior of the system. Estimators associated with the various models will ensure that the models are providing accurate representations of the engine and its subsystems and components as well as estimate the model state. Model-based diagnostics provide accurate engine condition information (deterioration, damage, and engine system failures), relying both on models and on sensed parameters. Nonlinear model predictive control maintains robust, high-performance control of the engine in the presence of system faults and mission segment-specific operational goals, using the predictive capabilities of model and information from the model-based diagnostics. Overall health management is the confluence of on-board diagnostics, fault-tolerant control, and an adaptation of the model-based controller.

In order to be able to detect smaller failures and make more optimal control decisions, the control system needs to have as much information as possible about the engine or engine subsystem that it is controlling. One of the best methods to gain this information about the system is to use a dynamic model inside of the control. Doing this gives information about how different engine parameters should respond given the current ambient conditions and actuator commands, the relationships between parameters in the system, the relationships between measured and unmeasured parameters, and the parameters that indicate the health of the engine. If the model is dynamic, then all of this information is found on both a steady state and transient basis. The model can also be used to analyze a profile of past measurements or current performance, or it can be used to predict how the engine will behave over a future time horizon. The model can be linear or nonlinear, physics-based, or system identification based. The model can represent each of the main components of the engine at a system level, including the inlet, fan, compressor, combustor, high pressure turbine, low pressure turbine, afterburner, variable area exhaust nozzle, and other components or subsystems including actuators, fuel systems, and lube systems. One of the goals in designing this model will be to recreate the nominal engine or subsystem steady state and transient performance and use this model inside of the model-based control, and estimator. Another formulation would use models with faulted, failed, or damaged characteristics in a single or multi-model fault diagnostic system.

Because each engine is different, deteriorates, and may become faulted or damaged, the model should be able to track or adapt itself to follow these changes. One helpful idea is to get a model to reveal information about the particular engine running at the current time. This facilitates the ability to predict more accurately future behavior and to detect smaller faults or damage levels. Two areas of the model that can be modified to match the engine model to the current engine are engine parameters and states. The tool used to determine the engine parameters is called a parameter estimator, and the tool used to determine the states is a state estimator.

A parameter estimator estimates and modifies parameters in the engine model in order to reduce the error between the engine sensors and the model sensors, or this is called tracking the model to the engine. The parameters that are modified usually fall in the class called quality parameters, e.g. component efficiencies, flow, input or output scalars or adders. These quality parameters like component efficiencies can then be used as inputs to the diagnostic algorithms. For example, if the compressor efficiency drops by a couple of points during steady state operation, it may indicate damage has occurred in the compressor. In this realization the parameter estimator works in real-time on both transient information and steady state information.

A state estimator is used to also aid in tracking and is the state information is also used to initialize the model-based control at each time interval. Since the model-based control is a full state controller, it will use the estimate of the current state of the engine to initialize and function correctly. The goal of the state estimator is to determine the optimum gain K to account for the differences between the model and the engine, given the model dynamics and the covariance of w and v.

The role of the diagnostics is to detect, isolate, and identify any fault, failure, or damage in the gas turbine system. For this embodiment the diagnostic system is based on model-based or multi-model based diagnostics where information from the other control components like the model and model structure, innovations, parameter updates, states, sensor values, sensor estimates are used to diagnose the engine upset. With this information the diagnostics determines if there is an upset, where the upset is located, and the magnitude of the upset and sends this information to the master mode selector and to the model-based controller.

Using reconfigurable model predictive control will allow the control system to use all of the information provided by the system model, estimator, master mode selector, and diagnostic system. Model predictive control (MPC) uses the model and the current state information in the control to predict the future behavior of the engine or system. Because a prediction of the future behavior can be formed given an evolution of control inputs, many different control moves can be tested over the future horizon to see which ones will track the desired references (e.g., speeds, pressure ratios, thrust) while still obeying any operating constraints (e.g., limits on the actuators, temperatures, speeds, pressures, torques). Then, once the control sequence that gives the desired results has been determined, the first control action in that sequence is implemented at the next sample period. The process is then repeated. The power in this algorithm is that the controller can now see what the engine is going to do over the future time horizon, and at the same time it knows the engine operating constraints. The control can then modify all of the control actions to ensure that none of the constraints are violated while optimally satisfying the control objective. This means that the control will develop the best possible solution to meet the mission requirements. This best control sequence can be determined by converting the problem into a form that an optimization algorithm can solve. MPC is based on the constrained open-loop optimization of a finite horizon objective function. This optimization uses the dynamic system model to describe the evolution of the outputs and commences from an assumed known initial state.

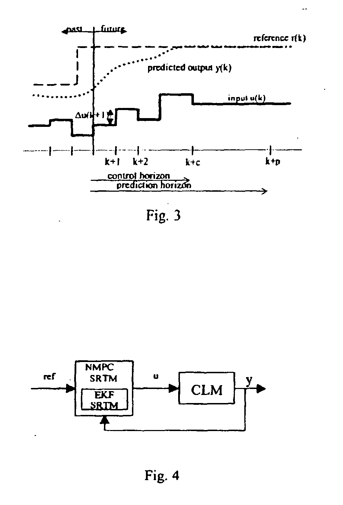

Figure 3 illustrates an implementation of NMPC based on the constrained open-loop optimization of a finite horizon objective function. This optimization uses a plant model to describe the evolution of the outputs and commences from an assumed known initial state. Figure 3 illustrates the concept of receding horizon control underpinning NMPC. At time k the input variables, {u(k), u(k+1), ..., u(k+p-1)}, are selected to optimize a performance criterion over the prediction horizon, p. Of the computed optimal control moves, only the values for the first sample, u(k), are actually implemented. Before the next time interval and its calculation of another p input values, {u(k+1), u(k+2), ..., u(k+p)}, the initial state is re-estimated from output measurements. This causes the seemingly open-loop strategy actually to implement a closed-loop control.

The NMPC and the EKF state estimator are both model-based procedures in which a model of the plant is calculated for the generation of state predictions. There is a clear hierarchy of models in this specific problem, the real plant, whose dynamics are not fully known, the CLM, which is a high-fidelity but computationally complex model which is difficult to linearize, and the SRTM, which is linearizeable and relatively simply iterated as part of the optimization procedure.

In an empirical study implementing the herein described methods, the controlled inputs are fuel flow demand (WFDMD) and exhaust area demand (A8DMD). Since the control is model based it can be designed to follow the unmeasured but estimated or computed parameters of interest such as thrust and stall margin, but this studies first goal is to perform to the same requirements as the production control already running an engine. For engine 10 the references are fan speed (ref1) and engine pressure ratio (ref2). While operating to these two references, the control is constrained by other operating limitations, such as, for example, maximum T4B, minimum and maximum PS3, minimum and maximum N25, maximum N2, rotor speed acceleration, and rotor speed deceleration. Also, both actuators are rate limited and have minimum and maximum slew positions. The formulation of NMPC used to work within this framework is now detailed.

An objective function J is defined over the prediction horizon p.

$$
\begin{aligned}
J = &\sum_{i=1}^{p} (PCN\ 2R_i - ref\ 1_i)^2 + \gamma * \sum_{i=1}^{p} (PP_i - ref\ 2_i)^2 + \\
&\rho_1 * \sum_{i=1}^{p} \Delta Wf_i^2 + \rho_2 \sum_{i=1}^{p} \Delta A8_i^2 + \\
&\delta_1 \sum_{i=1}^{p} (e^{(Ps3_{max} - Ps3_i)})^2 + \delta_2 \sum_{i=1}^{p} (e^{(PCN\ 2_{max} - PCN\ 2_i)})^2 + \\
&\delta_3 * \sum_{i=1}^{p} (e^{(T4B_{max} - T4B_i)})^2 + \delta_4 \sum_{i=1}^{p} (e^{(PCN\ 25_{max} - PCN\ 25_i)})^2 + \cdots
\end{aligned}
$$

(2)

Where $\gamma$, $\rho$, and $\delta$ are weighting factors. The SRTM is used as the predictor to obtain the turbine cycle parameters' response over the prediction horizon. The constraints on cycle parameters like PS3 and T4B are included as soft constraints or penalty functions. This is implemented by using an exponential term that is very small, i.e. little effect on J, when operating away from the constraint, but penalizes J heavily when the parameter comes near the constraint. The $\Delta Wf$ and $\Delta A8$ terms are added to both to make sure that the control does not attempt to take unfeasibly large steps, and also they are set to be just outside of the range of the actual input constraints to make sure that the gradient follows a direction that will correspond with the final solution.

The control goal is

$$\min_{u} J . \qquad (3)$$

Where u is the vector of p future WFCMD and A8CMD control inputs. This is accomplished using a gradient descent method with central differences. The gradient computation is shown in eq. (4).

$$\nabla J = \frac{J(u+du) - J(u-du)}{2\,du} = \begin{vmatrix} \dfrac{\partial J}{\partial wfdmd}_{\,i} & \dfrac{\partial J}{\partial A8dmd}_{\,i} \\ \vdots & \vdots \\ \dfrac{\partial J}{\partial wfdmd}_{\,i+c} & \dfrac{\partial J}{\partial A8dmd}_{\,i+c} \\ 0 & 0 \\ \vdots & \vdots \\ 0_{\,i+p} & 0_{\,i+p} \end{vmatrix}$$

$$(4)$$

The control inputs are then computed by taking n steps in the negative gradient direction until J is minimized, or the maximum number of iterations or search time is reached. Projection of the inputs is applied at this time to ensure that the actuator rate and position limits are not violated. The control values are calculated using

$$u(k+1) = u(k) - \beta * \nabla J$$

$$(5)$$

Where $\beta$ is a weighting matrix that accounts for gradient step size and weighting between the two control inputs.

NMPC is a full state feedback controller and hence all states need to be measured or estimated from available measurements. Typically not all states are measured because of the cost or availability of sensors. Moreover sensors have dynamics, delays, and noise. Hence a dynamic observer is useful to reconstruct the states and reduce noise. An Extended Kalman Filter (EKF) is used for this purpose. Useful EKF's are described in Athans, M. (1996), The Control Handbook, pg. 589-594, CRC Press, United States, and B.D.O. Anderson and J.B. Moore, Optimal Filtering, Prentice-Hall, Englewood Cliffs NJ, 1979.

The EKF is a nonlinear state estimator which is based on a dynamical system model. While the model underpinning the EKF is nonlinear, the recursion is based on a linear gain computed from the parameters of the linearized model. Thus the design concepts inherit much from the realm of Kalman Filtering. In the instant implementation, the SRTM is used as the core of the EKF, which is a parallel with its use in the NMPC.

Akin to the gradient-based NMPC, the EKF need not provide the truly optimal state estimate to the controller in order to operate adequately well. It is usually a suboptimal nonlinear filter in any case. However, its role in providing the state estimates to the NMPC for correct initialisation is a key feature of NMPC which is often overlooked.

The EKF and SRTM are wrapped into the NMPC logic and this is connected to the CLM. Figure 4 illustrates a block diagram representation of how EKF, SRTM, NMPC, and CLM are connected. The assembled control process starts with the EKF using the SRTM to determine the current state of the engine. This information is used as the initial conditions for the predictions used in the gradient calculation. The SRTM is then run 2*c times where 2 is the number of control inputs and c the control horizon used is 15 steps. The sample time is 10 mseconds for each time step. Each run corresponds to a perturbation at a different point in the control horizon. This information is assembled into the gradient and a search path is followed in the negative gradient direction.

This simulation configuration with the NMPC control algorithm is run for a step demand in power from the pilot. This is a critical simulation that would be used to replicate an aircraft takeoff, combat, or ground avoidance maneuver.

The PCN2 reference (ref1) is stepped up to increase the resulting thrust. PP reference (ref2) is reduced to maintain sufficient fan stall margin. Both PCN2 and PP try to follow the references for the first 4 seconds with PCN2 reaching the reference and PP resulting in a steady state error. The response time of PCN2 to the reference is limited mainly by the changing maximum constraint on WFDMD. This maximum constraint is used in the production control as an acceleration limiter to protect against compressor surge or stall. The PP steady state error is due to the A8CMD hitting the minimum constraint and PCN2 being weighted more heavily in the objective function. The results of the production control to the same step input are within 4 percent transiently and 0.2% steady state.

While NMPC can recreate the current production control, using this technology may unlock many potential benefits. Using the model based properties of NMPC can lead to running to other more attractive references like thrust and stall margin. The model can also be used for fault detection, isolation, and accommodation. The open architecture of NMPC allows for many extensions and variations that may allow for performance, operability, or survivability improvements.

**Claims**

1. A system for designing the operations and controls of an aircraft gas turbine engine (10), said system comprising:

   a computing unit with an input unit for generating an operations model for the aircraft gas turbine engine to include at least one objective function (J) and for defining operations and controls constraints for the operations model of the aircraft gas turbine engine; and
   a dynamic online optimizer/controller configured to dynamically optimize and control operation of the gas turbine using model predictive control based on the operations model and the operations and control constraints using an Extended Kalman Filter for estimation, **characterized in that**:

   said optimizer/controller is configured to compute the gradient of J wherein

$$J = \sum_{i=1}^{p} (Y1_i - Y1ref_i)^2 + \gamma * \sum_{i=1}^{p} (Y2_i - Y2ref_i)^2 +$$

$$\rho_1 * \sum_{i=1}^{p} \Delta U1_i^2 + \rho_2 \sum_{i=1}^{p} \Delta U2_i^2 +$$

$$\delta_1 \sum_{i=1}^{p} (e^{(Out1_{min} - Out1_i)})^2 + \delta_2 \sum_{i=1}^{p} (e^{(Out2_i - Out2_{max})})^2 + \dots$$

   where $Y1_i$, $Y2_i$ are predicted output parameters; $Y1ref_i$, $Y2ref_i$ are references for output parameters; $U1_i$, $U2_i$ are control inputs; Out1, Out2 are cycle or state parameters; and $\gamma$, $\rho$, and $\delta$ are weighting factors.

2. A system according to Claim 1, wherein said optimizer/controller is configured to perform the following steps in a loop: (A) estimating the current engine (10) state and applicable constraints; (B) for a given control/simulation time period, determining a control action by optimizing an objective function based on the operation model while respecting the applicable constraints; (C) executing the control action determined in step (B).

3. A system in accordance with Claim 1 wherein said optimizer/controller is configured to traverse the gradient in a negative direction until a number of steps equals a predetermined number.

4. A system in accordance with Claim 1 wherein said optimizer/controller is configured to traverse the gradient in a negative direction until J is minimized.

5. A system in accordance with Claim 1 wherein said optimizer/controller is configured to traverse the gradient in a negative direction until an elapsed time exceeds a predetermined time interval.

**Patentansprüche**

1. System zur Auslegung des Betriebs und der Regelung eines Flugzeug-Gasturbinentriebwerks (10), wobei das System aufweist:

   eine Berechnungseinheit mit einer Eingabeeinheit zum Erzeugen eines Betriebsmodells für das Flugzeug-Gasturbinentriebwerk, so dass es wenigstens eine Zielfunktion (J) enthält, und zum Definieren von Betriebs- und Regelungseinschränkungen für das Betriebsmodell des Flugzeug-Gasturbinentriebwerks; und
   eine dynamische Online-Optimierungs/Regelungs-Einrichtung, die dafür konfiguriert ist, den Betrieb des Gasturbinentriebwerks dynamisch unter Anwendung einer modellprädiktiven Regelung auf der Basis des Betriebsmodells und der Betriebs- und Regelungseinschränkungen unter Verwendung eines erweiterten Kalman-Filters zur Abschätzung zu optimieren und zu regeln, **dadurch gekennzeichnet, dass**
   die Optimierungs/Regelungs-Einrichtung dafür konfiguriert ist, den Gradienten von J zu berechnen, wobei

$$J = \sum_{i=1}^{p} (Y1_i - Y1ref_i)^2 + \gamma * \sum_{i=1}^{p} (Y2_i - Y2ref_i)^2 +$$

$$\rho_1 * \sum_{i=1}^{p} \Delta U1_i^2 + \rho_2 \sum_{i=1}^{p} \Delta U2_i^2 +$$

$$\delta_1 \sum_{i=1}^{p} (e^{(Out1_{min} - Out1_i)})^2 + \delta_2 \sum_{i=1}^{p} (e^{(Out2_i - Out2_{max})})^2 + \ldots$$

   und wobei $Y1_i$, $Y2_i$ vorhergesagte Ausgangsparameter sind; $Y1ref_i$, $Y2ref_i$ Bezugswerte für Ausgangsparameter sind; $U1_i$, $U2_i$ Regelungseingangssignale sind; Out1, Out2 Zyklus- oder Statusparameter sind; und $\gamma$, $\rho$ und $\delta$ Gewichtungsfaktoren sind.

2. System nach Anspruch 1, wobei die Optimierungs/Regelungs-Einrichtung dafür konfiguriert ist, die nachstehenden Schritte in einer Schleife durchzuführen: (A) Abschätzen des Ist-Zustands des Triebwerks (10) und zutreffender Einschränkungen; (B) für eine vorgegebene Regelungs/Simulations-Zeitperiode Ermitteln einer Regelungsaktion durch Optimierung einer Zielfunktion auf der Basis des Betriebsmodells unter Berücksichtigung der zutreffenden Einschränkungen; (C) Ausführen der im Schritt (B) ermittelten Regelungsaktion.

3. System nach Anspruch 1, wobei die Optimierungs/Regelungs-Einrichtung dafür konfiguriert ist, den Gradienten in einer negativen Richtung zu verstellen, bis eine Anzahl von Schritten gleich einer vorbestimmten Anzahl ist.

4. System nach Anspruch 1, wobei die Optimierungs/Regelungs-Einrichtung dafür konfiguriert ist, den Gradienten in einer negativen Richtung zu verstellen, bis J minimiert ist.

5. System nach Anspruch 1, wobei die Optimierungs/Regelungs-Einrichtung dafür konfiguriert ist, den Gradienten in einer negativen Richtung zu verstellen, bis eine verstrichene Zeit ein vorbestimmtes Zeitintervall überschreitet.

**Revendications**

1. Système pour concevoir les opérations et les commandes d'un moteur (10) d'avion à turbine à gaz, ledit système comprenant :

   une unité de calcul avec une unité d'entrée servant à générer un modèle de fonctionnement pour que le moteur d'avion à turbine à gaz comprenne au moins une fonction objective (J), et à définir des contraintes de fonctionnement et de commande pour le modèle de fonctionnement du moteur d'avion à turbine à gaz ; et

un dispositif dynamique d'optimisation/de commande en ligne configuré pour optimiser et commander de manière dynamique le fonctionnement de la turbine à gaz en utilisant une commande prédictive à modèle en fonction du modèle de fonctionnement et des contraintes de fonctionnement et de commande en utilisant un filtre de Kalman étendu pour estimation, **caractérisé en ce que** :

ledit dispositif d'optimisation/de commande est configuré pour calculer le gradient de J dans lequel

$$J = \sum_{i=1}^{\ell} (Y1_i - Y1ref_i)^2 + \gamma * \sum_{i=1}^{\ell} (Y2_i - Y2ref_i)^2 +$$
$$\rho_1 * \sum_{i=1}^{\ell} \Delta U1_i^2 + \rho_2 \sum_{i=1}^{\ell} \Delta U2_i^2 +$$
$$\delta_1 \sum_{i=1}^{\ell} (e^{(Out1_{i} - Out1_i)})^2 + \delta_2 \sum_{i=1}^{\ell} (e^{(Out2_i - Out2_i)})^2 + \ldots$$

où $Y1_i$ et $Y2_i$ sont des paramètres de sortie prédits ; $Y1ref_i$ et $Y2ref_i$ sont des références de paramètres de sortie ; $U1_i$ et $U2_i$ sont des entrées de commande ; Out1 et Out2 sont des paramètres de cycle ou d'état ; et $\gamma$, $\zeta$ et $\delta$ sont des facteurs de pondération.

2. Système selon la revendication 1, dans lequel ledit dispositif d'optimisation/de commande est configuré pour effectuer les étapes suivantes en boucle : (A) estimation de l'état actuel du moteur (10) et des contraintes applicables ; (B) pendant une période de temps de commande/simulation donnée, détermination d'une action de commande en optimisant une fonction objective en fonction du modèle de fonctionnement tout en respectant les contraintes applicables ; (C) exécution de l'action de commande déterminée dans l'étape (B).

3. Système selon la revendication 1, dans lequel ledit dispositif d'optimisation/de commande est configuré pour traverser le gradient dans une direction négative jusqu'à ce qu'un nombre d'étapes soit égal à un nombre prédéterminé.

4. Système selon la revendication 1, dans lequel ledit dispositif d'optimisation/de commande est configuré pour traverser le gradient dans une direction négative jusqu'à ce J soit réduit au minimum.

5. Système selon la revendication 1, dans lequel ledit dispositif d'optimisation/de commande est configuré pour traverser le gradient dans une direction négative jusqu'à ce qu'une période de temps écoulée dépasse un intervalle de temps prédéterminé.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOE QIN S ; THOMAS A BADGWELL.** A survey of industrial model predictive control technology. *Control Engineering Practice,* July 2003, vol. 11 (7), 733-764

- **ATHANS, M.** The Control Handbook. CRC Press, 1996, 589-594
- **B.D.O. ANDERSON ; J.B. MOORE.** Optimal Filtering. Prentice-Hall, 1979